# EUROPEAN PATENT APPLICATION

(11) **EP 3 764 473 A1**
(43) Date of publication of application: **13.01.2021**
(21) Application number: 18908598.8
(22) Date of filing: 02.05.2018
(51) Int. Cl.: H01Q 9/04, H01Q 1/24, H01Q 3/26, H04M 1/02

(54) **MOBILE TERMINAL HAVING ANTENNA**

(30) Priority: 06.03.2018 US 201862638971 P
(71) Applicant: LG Electronics, Inc., Yeongdeungpo-gu Seoul 07336 (KR)
(72) Inventor: RYU, Seungwoo, Seoul 06772 (KR); LEE, Jaewon, Seoul 06772 (KR); LEE, Joohee, Seoul 06772 (KR); JUNG, Junyoung, Seoul 06772 (KR)
(74) Representative: Vossius & Partner Patentanwälte Rechtsanwälte mbB
(86) International application number: PCT/KR2018/005110
(87) International publication number: WO 2019/172482

(57) **Abstract**

A mobile terminal according to the present invention, comprises: a first patch antenna operating in a first frequency band and having a circular or polygonal shape; and a second patch antenna operating in a second frequency band that is higher than the first frequency band and having a shape different from the shape of the first patch antenna, wherein through the patch antennas having different shapes, isolation between the antennas operating in different frequency bands can be improved.

## Description

### BACKGROUND

### 1. Technical Field

This application claims the benefit of an earlier filing date of and the right of priority to U.S. Provisional Application No. 62/638,971, filed on March 6, 2018, the contents of which are incorporated by reference herein in its entirety.

The present disclosure relates to a mobile terminal having an antenna. More specifically, the present disclosure relates to a mobile terminal having antennas operating in different frequency bands.

### 2. Description of the Related Art

Terminals may be classified into mobile/portable terminals and stationary terminals according to their mobility. Furthermore, mobile terminals may be divided into handheld terminals and vehicle mounted terminals according to whether or not it can be directly carried by a user.

The functions of mobile terminals have been diversified. For example, the functions may include data and voice communication, photographing and video shooting through a camera, voice recording, playing a music file through a speaker system, and displaying an image or video on a display module. Some terminals further include an electronic game play function or perform a multimedia player function. In particular, in recent years, mobile terminals may receive multicast signals that provide visual content such as broadcast, video or television programs.

As it becomes multifunctional, for example, such a terminal is allowed to capture still images or moving images, play music or video files, play games, receive broadcast and the like, so as to be implemented as an integrated multimedia player.

In order to enhance the functions of the terminal, the improvement of structural or software elements of the terminal may be taken into consideration.

In addition to the above attempts, in recent years, a wireless communication system using LTE communication technology has been commercialized to provide various services. Furthermore, in the future, it is expected that wireless communication systems using 5G communication technology will be commercialized to provide various services.

In this regard, the 5G communication system has a sub-6 communication system using a frequency band below 6 GHz. In addition, the 5G communication system has a millimeter wave communication system using a millimeter wave band around 30 GHz. In connection with the millimeter wave communication system, a first frequency band of 28 GHz band and a second frequency band of 39 GHz band are being discussed.

Meanwhile, each antenna may be arranged in a separate area in the plurality of millimeter wave frequency bands. However, when an antenna operating in the first frequency band and an antenna operating in the second frequency band are arranged in separate areas of the mobile terminal, there is a problem in the PCB mounting space.

On the other hand, when a single antenna operates in both the first frequency band and the second frequency band, there is a problem that the two frequency bands are too wide for broadband design. Moreover, when a single antenna operates in a wide band, there is a problem that radiation efficiency and bandwidth characteristics in each frequency band may be deteriorated.

Meanwhile, in a millimeter wave communication system, an array antenna is essential because free space loss increases due to a short wavelength of radio waves. Accordingly, in such an array antenna structure, each element of the array antenna operating in the second frequency band may be arranged between each element of the array antenna operating in the first frequency band. However, in such an array antenna structure, there is a problem in that poor isolation between different antennas occurs.

### SUMMARY

An aspect of the present disclosure is to solve the above-mentioned problems and other problems. Another aspect of the present disclosure is to provide a mobile terminal capable of improving isolation between antennas operating in different frequency bands.

Still another aspect of the present disclosure is to improve bandwidth characteristics while improving isolation between antennas operating in different millimeter wave frequency bands.

In order to achieve the foregoing and other objectives, according to an aspect of the present disclosure, a mobile terminal may include a first patch antenna operating in a first frequency band, and having a circular or polygonal shape; and a second patch antenna operating in a second frequency band that is a higher frequency band than the first frequency band, and having a shape different from that of the first patch antenna, thereby improving isolation between antennas operating at different frequency bands through different shapes of patch antennas.

According to an embodiment, the first patch antenna may have a parasitic resonance frequency formed in a frequency band higher than the second frequency band due to the circular or octagonal or more polygonal shape to improve isolation from the second patch antenna.

According to an embodiment, the first patch antenna may have the circular shape, and the second patch antenna may have a square shape.

According to an embodiment, the first patch antenna and the second patch antenna may be disposed on a first layer corresponding to the same plane to improve a steering angle range during beam steering.

According to an embodiment, the mobile terminal may further include a third patch antenna disposed on a second layer corresponding to a bottom surface than the first layer to operate in the first frequency band together with the first patch antenna; and a fourth patch antenna disposed on a third layer that is a layer different from the second layer to operate in the second frequency band together with the second patch antenna. Here, the fourth patch antenna may be disposed on a third layer that is a layer different from the second layer to improve isolation from the third patch antenna.

According to an embodiment,, the mobile terminal may further include a third patch antenna disposed on a second layer corresponding to a bottom surface than the first layer to operate in the first frequency band together with the first patch antenna; and a fourth patch antenna disposed on a third layer corresponding to a bottom surface than the second layer to operate in the second frequency band together with the second patch antenna. Here, the fourth patch antenna may be disposed on a third layer corresponding to a bottom surface than the second layer to improve isolation from the third patch antenna, and improve the performance of the fourth patch antenna in the second frequency band.

According to an embodiment, the third patch antenna may have a square shape to reduce antenna size compared to other shapes of antennas in the first frequency band.

According to an embodiment, the third patch antenna and the fourth patch antenna may be respectively fed by horizontal polarization (HP) and vertical polarization feeding. Furthermore, either one of the horizontal polarization feeding and the vertical polarization feeding may be made by direct feeding, and the other one may be made by coupled feeding.

According to an embodiment, a feed line for the direct feeding may be connected to a matching transformer on the same layer, and the matching transformer may be connected to a via pad on the same layer. Here, the via pad may be connected to a signal line of a lower layer through a vertical via hole from the lower layer corresponding to a bottom surface than the second layer and the third layer to the second layer and the third layer.

According to an embodiment, the first patch antenna and the third patch antenna may operate as first antenna elements in the first frequency band, and the second patch antenna and the fourth patch antenna may operate as second antenna elements in the second frequency band. Here, the first antenna elements and the second antenna elements may be composed of "n" one-dimensional arrays, and the second antenna elements may be disposed between adjacent first antenna elements.

According to an embodiment, the first patch antenna and the third patch antenna may operate as first antenna elements in the first frequency band, and the second patch antenna and the fourth patch antenna may operate as second antenna elements in the second frequency band, and the first antenna elements and the second antenna elements may be composed of "n x n" two-dimensional arrays. Here, the second antenna elements may be disposed between adjacent first antenna elements, and the second antenna elements may be arranged offset by half of the column-direction spacing between antenna elements adjacent in a row direction.

In order to achieve the foregoing and other objectives, according to another aspect of the present disclosure, there is provided a mobile terminal, including a multi-layer circuit board having a ground formed at a lowermost end thereof; a first patch antenna operating in a first frequency band, and disposed in a circular or polygonal shape on a first layer that is an upper end of the multi-layer circuit board; and a second patch antenna operating in a second frequency band that is a higher frequency band than the first frequency band, and disposed on the same layer as the first patch antenna in a shape different from the first patch antenna.

According to an embodiment, the first patch antenna may have the circular shape, and the second patch antenna may have a square shape, and the first patch antenna may have a parasitic resonance frequency formed in a frequency band higher than the second frequency band due to the circular shape to improve isolation from the second patch antenna.

According to an embodiment, the mobile terminal may further include a third patch antenna disposed on a second layer corresponding to a bottom surface than the first layer to operate in the first frequency band together with the first patch antenna; and a fourth patch antenna disposed on a third layer that is a layer different from the second layer to operate in the second frequency band together with the second patch antenna. Here, the fourth patch antenna is disposed on a third layer that is a layer different from the second layer to improve isolation from the third patch antenna.

According to an embodiment, the fourth patch antenna may be disposed on a third layer corresponding to a bottom surface than the second layer to improve isolation from the third patch antenna, and improve the performance of the fourth patch antenna in the second frequency band. Furthermore, the third patch antenna may have a square shape to reduce antenna size compared to other shapes of antennas.

The effects of a mobile terminal having antennas according to the present disclosure will be described as follows.

According to at least one of the embodiments of the present disclosure, it may be possible to improve isolation between antennas operating in different frequency bands through patch antennas of different shapes.

Furthermore, according to at least one of the embodiments of the present disclosure, patch antennas of different shapes may be stacked in a vertical direction, thereby improving isolation between antennas operating in different millimeter wave frequency bands while enhancing bandwidth characteristics thereof.

In addition, according to at least one of the embodiments of the present disclosure, the shapes of patch antennas stacked in a vertical direction may be optimally selected in consideration of isolation, thereby improving isolation between antennas operating in different millimeter wave frequency bands while enhancing bandwidth characteristics thereof.

Further scope of applicability of the present disclosure will become apparent from the detailed description given hereinafter. However, it should be understood that the detailed description and specific examples such as preferred embodiments of the invention are given by way of illustration only, since various changes and modifications within the spirit and scope of the invention will become apparent to those skilled in the art from this detailed description.

### BRIEF DESCRIPTION OF THE DRAWINGS

FIG. 1A is a block diagram for explaining a mobile terminal associated with the present disclosure.
FIGS. 1B and 1C are conceptual views illustrating an example in which a mobile terminal associated with the present disclosure is seen from different directions.
FIG. 2 is a front view of an array antenna provided in a mobile terminal according to the present disclosure.
FIG. 3 illustrates a side view of an antenna provided in a mobile terminal according to the present disclosure.
FIG. 4A shows a simulation result of return loss and isolation when the shape of a first patch antenna has a square patch in connection with the present disclosure.
FIG. 4B shows a return loss and isolation simulation result when the shape of the first patch antenna according to the present disclosure has a circular patch.
FIG. 4C is a comparison between sizes of a square patch and a circular patch in the same frequency band in connection with the present disclosure.
FIG. 5 is a side view showing a plurality of layer structures according to the present disclosure and a connection relationship therebetween.
FIG. 6 shows a structure in which a first antenna element and a second antenna element according to the present disclosure are arranged in a two-dimensional array.
FIG. 7 shows reflection loss and isolation in the first and second frequency bands in a one-dimensional array structure of the present disclosure.
FIG. 8 shows reflection loss and isolation in the first and second frequency bands in a two-dimensional array structure of the present disclosure.
FIG. 9 shows a mobile terminal including a multi-layer circuit board and an antenna according to the present disclosure.

### DETAILED DESCRIPTION OF THE EMBODIMENTS

Hereinafter, preferred embodiments of the present disclosure will be described in detail with reference to the accompanying drawings, and the same or similar elements are designated with the same numeral references regardless of the numerals in the drawings and their redundant description will be omitted. A suffix "module" and "unit" used for constituent elements disclosed in the following description is merely intended for easy description of the specification, and the suffix itself does not give any special meaning or function. In describing the present disclosure, moreover, the detailed description will be omitted when a specific description for publicly known technologies to which the invention pertains is judged to obscure the gist of the present disclosure. The accompanying drawings are used to help easily understand the technical idea of the present disclosure and it should be understood that the idea of the present disclosure is not limited by the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. On the contrary, in case where an element is "directly connected" or "directly linked" to another element, it should be understood that any other element is not existed therebetween.

A singular representation may include a plural representation as far as it represents a definitely different meaning from the context.

Terms "include" or "has" used herein should be understood that they are intended to indicate the existence of a feature, a number, a step, a constituent element, a component or a combination thereof disclosed in the specification, and it may also be understood that the existence or additional possibility of one or more other features, numbers, steps, constituent elements, components or combinations thereof are not excluded in advance.

Mobile terminals described herein may include cellular phones, smart phones, laptop computers, digital broadcasting terminals, personal digital assistants (PDAs), portable multimedia players (PMPs), navigators, slate PCs, tablet PCs, ultra books, wearable devices (for example, smart watches, smart glasses, head mounted displays (HMDs)), and the like.

However, it may be easily understood by those skilled in the art that the configuration according to the exemplary embodiments of this specification can also be applied to stationary terminals such as digital TV, desktop computers, digital signages, and the like, excluding a case of being applicable only to the mobile terminals.

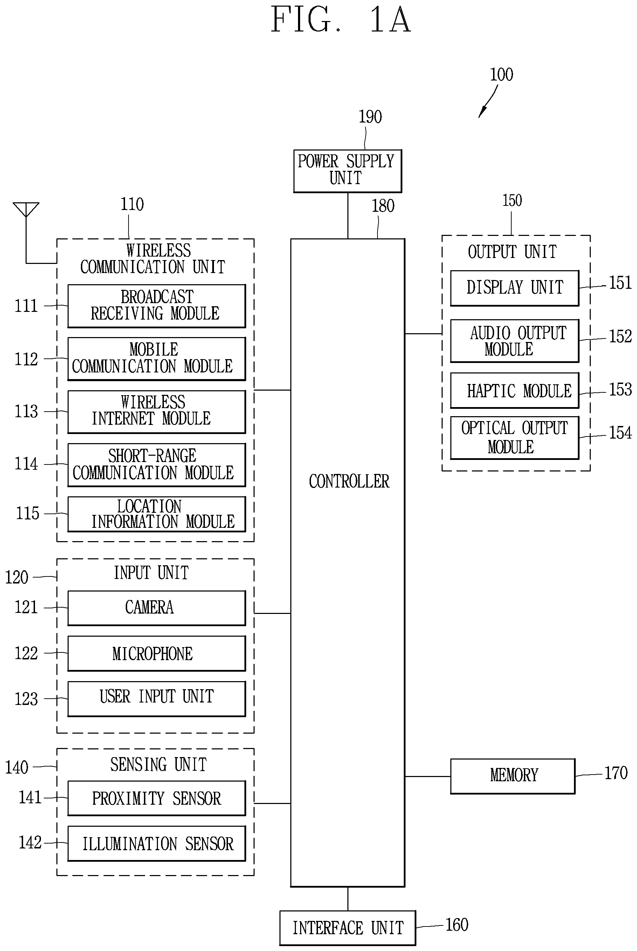

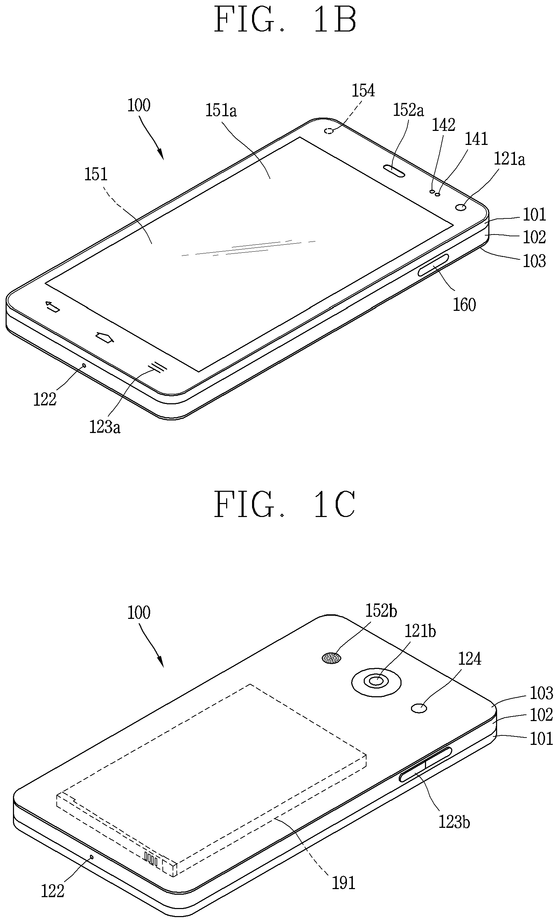

Referring to FIGS. 1A through 1C, FIG. 1A is a block diagram for explaining a mobile terminal associated with the present disclosure, and FIGS. 1B and 1C are conceptual views illustrating an example in which the mobile terminal associated with the present disclosure is seen from different directions.

The mobile terminal 100 may include components, such as a wireless communication unit 110, an input unit 120, a sensing unit 140, an output unit 150, an interface unit 160, a memory 170, a controller 180, a power supply unit 190 and the like. The components shown in FIG. 1A are not essential for implementing a mobile terminal, and thus the mobile terminal described herein may have more or fewer components than those listed above.

In more detail, the wireless communication unit 110 of those components may typically include one or more modules which permit wireless communications between the mobile terminal 100 and a wireless communication system, between the mobile terminal 100 and another mobile terminal 100, or between the mobile terminal 100 and an external server. In addition, the wireless communication unit 110 may include one or more modules for connecting the mobile terminal 100 to one or more networks.

The wireless communication unit 110 may include at least one of a broadcast receiving module 111, a mobile communication module 112, a wireless Internet module 113, a short-range communication module 114, a location information module 115 and the like.

The input unit 120 may include a camera 121 for inputting an image signal, a microphone 122 or an audio input module for inputting an audio signal, or a user input unit 123 (for example, a touch key, a push key (or a mechanical key), etc.) for allowing a user to input information. Audio data or image data collected by the input unit 120 may be analyzed and processed by a user's control command.

The sensing unit 140 may include at least one sensor which senses at least one of internal information of the mobile terminal, a surrounding environment of the mobile terminal and user information. For example, the sensing unit 140 may include a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, refer to the camera 121), a microphone 122, a battery gage, an environment sensor (for example, a barometer, a hygrometer, a thermometer, a radiation detection sensor, a thermal sensor, a gas sensor, etc.), and a chemical sensor (for example, an electronic nose, a health care sensor, a biometric sensor, etc.). On the other hand, the mobile terminal disclosed herein may utilize information in such a manner of combining information sensed by at least two sensors of those sensors.

The output unit 150 may be configured to output an audio signal, a video signal or a tactile signal. The output unit 150 may include a display module 151, an audio output module 152, a haptic module 153, an optical output unit 154 and the like. The display module 151 may have an inter-layered structure or an integrated structure with a touch sensor in order to facilitate a touch screen. The touch screen may provide an output interface between the mobile terminal 100 and a user, as well as functioning as the user input unit 123 which provides an input interface between the mobile terminal 100 and the user.

The interface unit 160 may serve as an interface with various types of external devices connected with the mobile terminal 100. The interface unit 160, for example, may include wired or wireless headset ports, external power supply ports, wired or wireless data ports, memory card ports, ports for connecting a device having an identification module, audio input/output (I/O) ports, video I/O ports, earphone ports, or the like. The mobile terminal 100 may execute an appropriate control associated with a connected external device, in response to the external device being connected to the interface unit 160.

In addition, the memory 170 stores data that support various functions of the mobile terminal 100. The memory 170 is typically implemented to store data to support various functions or features of the mobile terminal 100. For instance, the memory 170 may be configured to store application programs executed in the mobile terminal 100, data or instructions for operations of the mobile terminal 100, and the like. At least some of those application programs may be downloaded from an external server via wireless communication. Some others of those application programs may be installed within the mobile terminal 100 at the time of being shipped for basic functions of the mobile terminal 100 (for example, receiving a call, placing a call, receiving a message, sending a message, etc.). On the other hand, the application programs may be stored in the memory 170, installed in the mobile terminal 100, and executed by the controller 180 to perform an operation (or a function) of the mobile terminal 100.

The modem 180 may typically control an overall operation of the mobile terminal 100 in addition to the operations associated with the application programs. The modem 180 may provide or process information or functions appropriate for a user by processing signals, data, information and the like, which are input or output by the various components depicted in FIG. 1A, or activating application programs stored in the memory 170.

Furthermore, the modem 180 may control at least part of the components illustrated in FIG. 1A, in order to drive the application programs stored in the memory 170. In addition, the modem 180 may drive the application programs by combining at least two of the components included in the mobile terminal 100 for operation.

The power supply unit 190 may receive external power or internal power and supply appropriate power required for operating respective elements and components included in the mobile terminal 100 under the control of the modem 180. The power supply unit 190 may include a battery, and the battery may be an embedded battery or a replaceable battery.

At least part of those elements and components may be combined to implement operation and control of the mobile terminal or a control method of the mobile terminal according to various exemplary embodiments described herein. Furthermore, the operation and control or the control method of the mobile terminal may be implemented in the mobile terminal in such a manner of activating at least one application program stored in the memory 170.

Referring to FIGS. 1B and 1C, the mobile terminal 100 disclosed herein may be provided with a bar-type terminal body. However, the present disclosure may not be necessarily limited to this, and may be also applicable to various structures such as a watch type, a clip type, a glasses type, a folder type in which two or more bodies are coupled to each other in a relatively movable manner, a slide type, a swing type, a swivel type, and the like. The present disclosure relates to a specific type of mobile terminal, but the description of a specific type of mobile terminal may be also applicable to another type of mobile terminal in general.

Here, the terminal body may be understood as a conception which indicates the mobile terminal 100 as at least one assembly.

The mobile terminal 100 may include a case (for example, a frame, a housing, a cover, etc.) constituting the appearance thereof. In this embodiment, the case may be divided into a front case 101 and a rear case 102. Various electronic components may be incorporated into a space formed between the front case 101 and the rear case 102. At least one middle case may be additionally disposed between the front case 101 and the rear case 102

A display module 151 may be disposed on a front surface of the terminal body to output information. As illustrated, a window 151a of the display module 151 may be mounted to the front case 101 so as to form the front surface of the terminal body together with the front case 101.

The mobile terminal 100 may include a display module 151, first and second audio output modules 152a and 152b, a proximity sensor 141, an illumination sensor 152, an optical output module 154, first and second cameras 121a and 121b, first and second manipulation units 123a and 123b, a microphone 122, an interface unit 160 and the like.

Hereinafter, description will be given of an exemplary mobile terminal 100 that the display module 151, the first audio output module 152a, the proximity sensor 141, the illumination sensor 142, the optical output module 154, the first camera 121a and the first manipulation unit 123a are disposed on the front surface of the terminal body, the second manipulation unit 123b, the microphone 122 and the interface unit 160 are disposed on a side surface of the terminal body, and the second audio output module 152b and the second camera 121b are disposed on a rear surface of the terminal body, with reference to FIGS. 1B and 1C.

However, the foregoing configuration may not be necessarily limited to the arrangement. The foregoing configuration may be excluded, substituted or disposed on another surface if necessary. For example, the first manipulation unit 123a may not be disposed on the front surface of the terminal body, and the second audio output module 152b may be disposed on the side surface other than the rear surface of the terminal body.

The display module 151 displays (outputs) information processed by the mobile terminal 100. For example, the display module 151 may display execution screen information of an application program driven in the mobile terminal 100 or user interface (Ul) and graphic user interface (GUI) information in response to the execution screen information.

The display module 151 may include at least one of a liquid crystal display (LCD), a thin film transistor-liquid crystal display (TFT-LCD), an organic light emitting diode (OLED), a flexible display, a 3-dimensional (3D) display, and an e-ink display.

The display module 151 may be implemented in two or more in number according to a configured aspect of the mobile terminal 100. For instance, a plurality of the display modules 151 may be arranged on one surface to be spaced apart from or integrated with each other, or may be arranged on different surfaces.

The display module 151 may include a touch sensor which senses a touch onto the display module so as to receive a control command in a touching manner. When a touch is input to the display module 151, the touch sensor may be configured to sense this touch and the modem 180 may generate a control command corresponding to the touch. The content which is input in the touching manner may be a text or numerical value, or a menu item which can be indicated or designated in various modes.

The first audio output module 152a may be implemented in the form of a receiver for transferring voice sounds to the user's ear or a loud speaker for outputting various alarm sounds or multimedia reproduction sounds.

The window 151a of the display module 151 may include a sound hole for emitting sounds generated from the first audio output module 152a. Here, the present disclosure may not be limited to this. It may also be configured such that the sounds are released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 may output light for indicating an event generation. Examples of the event generated in the mobile terminal 100 may include a message reception, a call signal reception, a missed call, an alarm, a schedule notice, an email reception, information reception through an application, and the like. When a user's event check is sensed, the modem 180 may control the optical output unit 154 to end the output of light.

The first camera 121a may process video frames such as still or moving images acquired by the image sensor in a video call mode or a capture mode. The processed video frames may be displayed on the display module 151 or stored in the memory 170.

The first and second manipulation units 123a and 123b are examples of the user input unit 123, which may be manipulated by a user to input a command for controlling the operation of the mobile terminal 100. The first and second manipulation units 123a and 123b may employ any method if it is a tactile manner allowing the user to perform manipulation with a tactile feeling such as touch, push, scroll or the like. In addition, the first and second manipulation units 123a and 123b may also employ a method of allowing the user to perform manipulation without a tactile feeling through a proximity touch, a hovering touch, or the like.

The drawings are illustrated on the basis that the first manipulation unit 123a is a touch key, but the present disclosure may not be necessarily limited to this. For example, the first manipulation unit 123a may be configured with a mechanical key, or a combination of a touch key and a push key.

The content received by the first and second manipulation units 123a and 123b may be set in various ways. For example, the first manipulation unit 123a may be used by the user to input a command such as menu, home key, cancel, search, or the like, and the second manipulation unit 123b may be used by the user to input a command, such as controlling a volume level being output from the first or second audio output module 152a or 152b, switching into a touch recognition mode of the display module 151, or the like.

As described above, in connection with the wireless communication unit 110, that is, the mobile communication module 111 and the wireless Internet module 112, the mobile terminal 100 having an antenna will be described as follows. Here, the wireless communication unit 110 includes a transceiver connected to the antenna to transmit and receive wireless signals. Meanwhile, the transceiver includes a first transceiver operating in a 4G communication system and a second transceiver operating in a 5G communication system. On the other hand, the 5G communication system has a sub-6 communication system using a frequency band below 6 GHz. In addition, the 5G communication system has a millimeter wave communication system using a millimeter wave band around 30 GHz. Meanwhile, in the millimeter wave communication system, a first frequency band and a second frequency band may be bands around 28 GHz and bands around 39 GHz, respectively, but are not limited thereto.

Hereinafter, embodiments associated with a mobile terminal having an antenna according to the present disclosure will be described with reference to the accompanying drawings. It should be understood by those skilled in the art that the present disclosure can be embodied in other specific forms without departing from the concept and essential characteristics thereof.

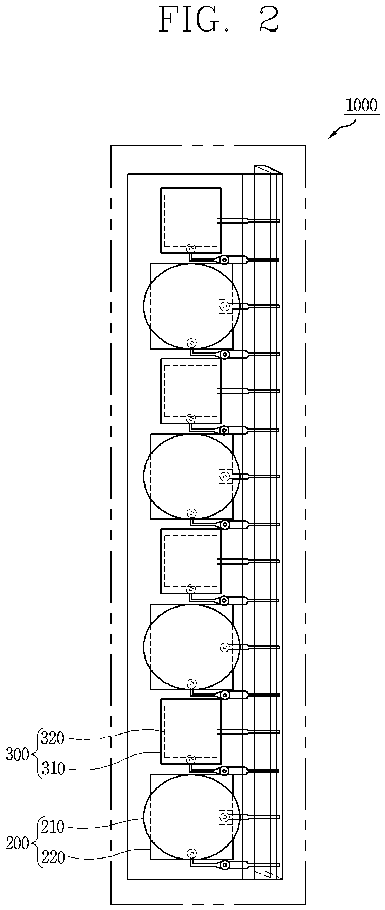

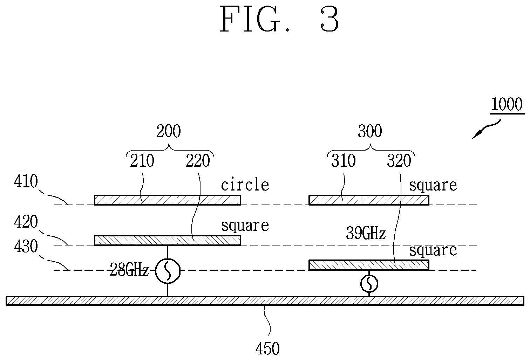

FIG. 2 is a front view of an array antenna provided in a mobile terminal according to the present disclosure. On the other hand, FIG. 3 illustrates a side view of an antenna provided in a mobile terminal according to the present disclosure.

Referring to FIGS. 2 and 3, the mobile terminal 1000 includes a first antenna element 200 operating in a first frequency band and a second antenna element 300 operating in a second frequency band. Meanwhile, the first antenna element 200 operates in a first frequency band, and includes a first patch antenna 210 having a circular or polygonal shape.

On the other hand, the second antenna element 300 operates in a second frequency band, which is a higher frequency band than the first frequency band, and includes a second patch antenna 310 having a different shape from the first patch antenna 210. Here, the first frequency band and the second frequency band may be bands around 28 GHz and bands around 39 GHz, respectively, as described above, but are not limited thereto.

Meanwhile, the first antenna element 200 and the second antenna element 300 may operate in a wide band through a third patch antenna 220 and a fourth patch antenna 320 disposed on a bottom surface of the first patch antenna 210 and the second patch antenna 310.

On the other hand, the first patch antenna 210 and the second patch antenna 310 are disposed on a first layer 410 corresponding to the same plane in order to improve steering angle range during beam steering. Here, the first layer 410 corresponds to an upper surface on which the patch antenna is disposed. The first patch antenna 210 and the second patch antenna 310 disposed on the upper surface as described above may be referred to as a "top patch" or a "stack patch".

The third patch antenna 220 is disposed on a second layer 420 corresponding to a bottom surface than the first layer 410, and may operate in a first frequency band together with the first patch antenna 210.

Meanwhile, the fourth patch antenna 320 is disposed on a third layer 430, which is a different layer from the second layer 420, and operates in a second frequency band together with the second patch antenna 310. The first patch antenna 210 and the second patch antenna 310 disposed on the lower surface as described above may be referred to as a "bottom patch" or an "active patch". Here, the meaning of the "active patch" is because the first patch antenna 210 and the second patch antenna 310 is fed.

On the other hand, the fourth patch antenna 320 is disposed on the third layer 430, which is a different layer from the second layer 420, thereby having an advantage of improving isolation from the third patch antenna 220.

Accordingly, in order to improve isolation between the first antenna element 200 and the second antenna element 300 according to the present disclosure, the third patch antenna 220 and the fourth patch antenna 320 may be preferably disposed on different layers. In this regard, even when the third patch antenna 220 and the fourth patch antenna 320 corresponding to bottom patches are disposed on different layers, they are not disturbed from a beam steering point of view, but help to improve isolation.

Meanwhile, as illustrated in FIG. 3, from a performance point of view, the fourth patch antenna 320, which is a lower patch of high frequency band is more preferably disposed below the third patch antenna 220. In other words, since the wavelength of the second frequency band is shorter than that of the first frequency band, it is more advantageous from a wavelength point of view that the fourth patch antenna 320 is disposed further below. For example, in 28 GHz and 39 GHz bands, the wavelengths thereof are about 10.7 mm and 7.7 mm, respectively. Therefore, a physical thickness of 0.7 mm is about 0.06 wavelength and 0.09 wavelength in the 28 GHz and 39 GHz bands, respectively. Accordingly, even when the fourth patch antenna 320, which is a lower patch of high frequency band, is physically disposed lower than the third patch antenna 220, it electrically corresponds to being disposed at a similar height. Therefore, the fourth patch antenna 220, which is a lower patch of high frequency band is more preferably disposed lower than the third patch antenna 220 in a performance point of view.

In this regard, the third patch antenna 220 is disposed on a second layer 420 corresponding to a bottom surface than the first layer 410 as described above, and may operate in a first frequency band together with the first patch antenna 210.

Meanwhile, as illustrated in FIG. 3, the fourth patch antenna 320 is disposed on the third layer 430 corresponding to a bottom surface than the second layer 420, and operates in a second frequency band together with the second patch antenna 220.

Accordingly, the fourth patch antenna 320 is disposed on the third layer 430 corresponding to a bottom surface than the second layer 420 to improve isolation from the third patch antenna 220. Furthermore, the fourth patch antenna 320 is disposed on the third layer 430 corresponding to a bottom surface than the second layer 420, thereby improving the performance of the fourth patch antenna 320 in the second frequency band, which is a high frequency band. In this regard, it is because feeding efficiency to the fourth patch antenna 320 decreases when the height of the fourth patch antenna 320 to a ground plane 450 increases above a predetermined level.

On the other hand, the optimization of the shapes of the first patch antenna 210 to the fourth patch antenna 320 described above will be described. As described above, the first patch antenna 210 operates in a first frequency band, and has a circular or polygonal shape. More specifically, the first patch antenna 210 has a parasitic resonance frequency formed in a higher frequency band than the second frequency band due to a circular or octagonal or more polygonal shape. Accordingly, isolation of the first patch antenna 210 from the second patch antenna 310 may be improved.

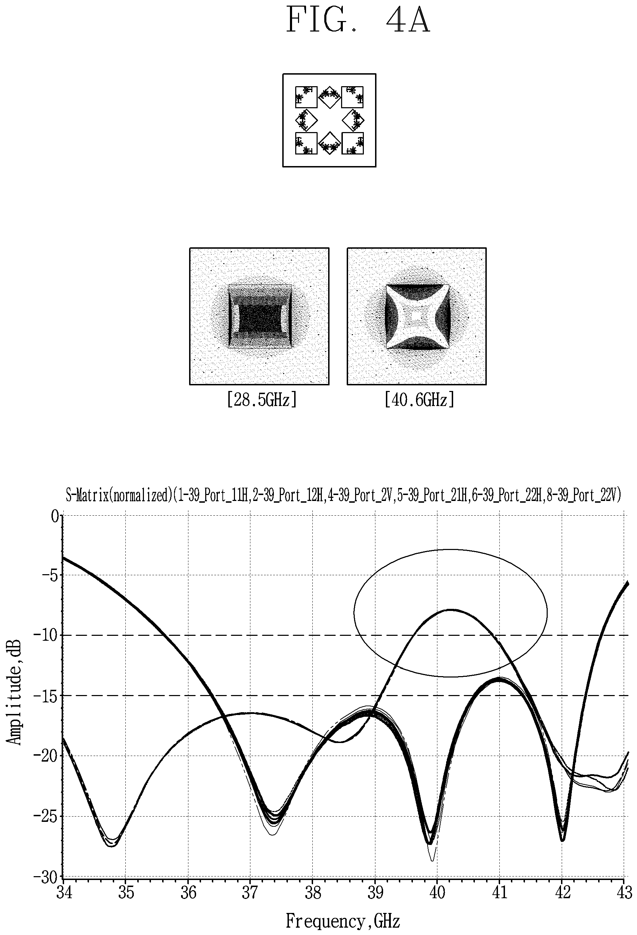

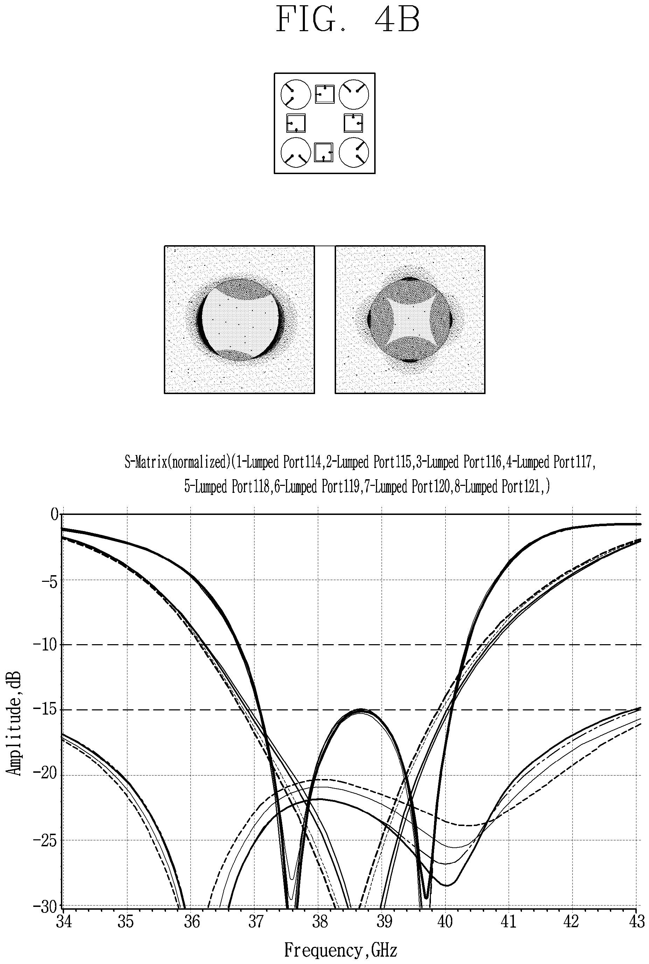

In this, FIG. 4A shows a simulation result of return loss and isolation when the shape of a first patch antenna has a square patch in connection with the present disclosure. On the contrary, FIG. 4B shows a return loss and isolation simulation result when the shape of the first patch antenna according to the present disclosure has a circular patch.

On the other hand, the goal of the return loss and isolation simulation is to secure an isolation level above 20 dB between vertical and horizontal polarizations and a return loss below -10 dB at a bandwidth of 3 GHz. In this regard, when the shape of the first patch antenna is a square patch, the cause of isolation reduction was analyzed through an eigen-mode analysis.

Referring to FIG. 4A, when the shape of the first patch antenna is a square patch, it can be seen that the square patch resonating at 28.5 GHz resonates at higher mode resonance at 40.6 GHz. Accordingly, it can be seen that the isolation characteristic is lowered to 10 dB or less at a frequency around 40 GHz. In this regard, simulations were performed on the first and second antenna arrangements in the form of 2x2. The first antenna array in the first frequency band was arranged at regular intervals in row and column directions. On the other hand, each antenna element of the second antenna array in the second frequency band was disposed between each element of the first antenna array in a 45-degree rotated form.

Meanwhile, referring to FIG. 4B, when the shape of the first patch antenna is a circular patch, it can be seen that the circular patch resonating at 28.5 GHz resonates at higher mode resonance at 45.8 GHz. As a result, as the higher order mode resonance frequency moves to a higher frequency than the square patch, there is an advantage of improving isolation in the second frequency band, about 39 GHz band. As shown in the simulation results, it can be seen that the isolation characteristic is improved because the isolation frequency has a value above 20 dB in a frequency bandwidth above 3 GHz, including the second frequency band, about 39 GHz band.

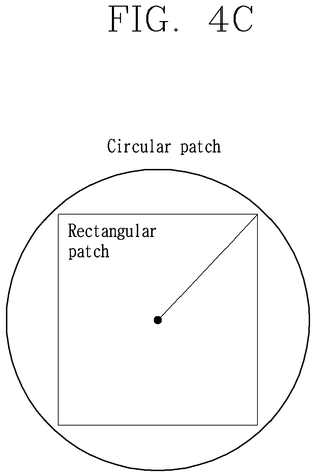

On the other hand, FIG. 4C is a comparison between sizes of a square patch and a circular patch in the same frequency band in connection with the present disclosure. As illustrated in FIG. 4C, the square patch has an advantage that it can be implemented in a small size in the same frequency band compared to the circular patch. However, as shown in FIGS. 4A and 4B, the square patch has a problem in that the isolation characteristic is deteriorated in the second frequency band as the high order mode resonance frequency is formed in a low frequency band.

On the contrary, a polygonal patch structure such as a circular patch has an advantage that the isolation characteristic is improved in the second frequency band as the higher order mode resonance frequency is formed in a high frequency band. However, as a size of the circular patch increases in the same frequency band, back radiation according to the finitely sized ground plane 450 may increase.

Therefore, it is advantageous that the second patch antenna 220 and the fourth patch antenna 320 to which feeding is made are implemented in a small-sized square patch shape. In addition, the second patch antenna 420 and the third patch antenna 430 are formed on different layers to improve isolation as described above, and thus the problem of isolation deterioration due to the shape of the square patch does not appear significantly.

On the contrary, the first patch antenna 210 and the third patch antenna 310 in the form of a stack patch are implemented on the same plane layer, and thus the isolation characteristic is most important. At this time, the first patch antenna 210 of the first frequency band, which is a low frequency band, is advantageously configured as a circular patch (or an octagonal or more polygonal patch). This is because the high order mode resonance frequency is moved to a high frequency band by the first patch antenna 210, thereby improving the isolation characteristic.

Meanwhile, the shape of the second patch antenna 310 is not necessarily composed of a circular patch (or an octagonal or more polygonal patch). This is because the high order mode resonance frequency is higher than the second frequency band since the second patch antenna 310 resonates in the second frequency band. Therefore, high order mode resonance by the second patch antenna 310 does not affect the first frequency band, which is a resonance frequency band of the first patch antenna 310.

Accordingly, the first patch antenna 210 must be formed with a circular or octagonal or more polygonal patch, and the third patch antenna 220 and the fourth patch antenna 320 must be formed in a square shape. As a result, the third patch antenna 220 has a square shape, and the antenna size may be reduced in the first frequency band compared to other shapes of antennas. In addition, the fourth patch antenna 320 also has a square shape, and the antenna size may be reduced in the second frequency band compared to other shapes of antennas.

On the other hand, the second patch antenna 310 is not limited in shape, but it is advantageous in terms of size to be formed with a square patch when there is no significant effect on other characteristics. Accordingly, the first patch antenna 210 may have a circular shape, and the second patch antenna 310 may have a square shape.

Meanwhile, referring to FIG. 2, the third patch antenna 220 and the fourth patch antenna 320 may be fed by horizontal polarization (HP) and vertical polarization feedings, respectively. At this time, one of the horizontal polarization feeding and the vertical polarization feeding may be performed by direct feeding, and the other one may be performed by coupled feeding. As such, by different types of feeding mechanisms, according to an embodiment, horizontal polarization may be performed by direct feeding, and vertical polarization may be performed by coupled feeding, but the present disclosure is not limited thereto.

According to another embodiment, horizontal polarization may be performed by coupled feeding, and vertical polarization may be performed by direct feeding.

On the other hand, the foregoing direct feeding method will be described as follows. A feed line for direct feeding is connected to a matching transformer on the same layer. For example, with respect to the third patch antenna 220, when a direct feeding type feed line is disposed on the second layer 420, a matching transformer may also be disposed on the second layer 420. On the other hand, with respect to the fourth patch antenna 320, when a direct feeding type feed line is disposed on the third layer 430, a matching transformer may also be disposed on the third layer 430.

Meanwhile, the matching transformer is connected to a via pad on the same layer. Here, the via pad is connected to a signal line of a lower layer through a vertical via hole from the lower layer corresponding to a bottom surface than the second layer 420 and the third layer 430 to the second layer 420 and the third layer 430.

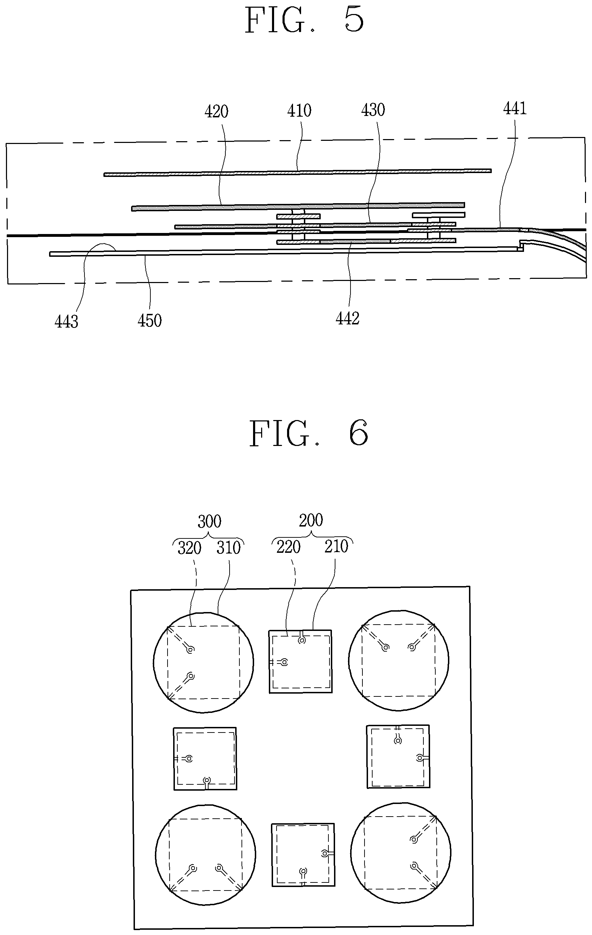

On the other hand, when the first antenna element 200 and the second antenna element 300 are implemented in a copper clad laminate (CCL) structure, the layer structure will be described as follows. In this regard, FIG. 5 is a side view showing a plurality of layer structures according to the present disclosure and a connection relationship therebetween.

Meanwhile, the signal line and the ground plane 450 may be implemented as follows due to a RFIC/PMIC region requiring a lot of layers while reducing the thickness of a rigid structure in the CCL structure.

In this regard, when a signal is transmitted from a flexible region in the form of a flexible substrate to a rigid region in which an antenna is disposed, a gap between the signal line and the ground surface 450 increases. Accordingly, the width of a microstrip line is increased, and the increased line affects the vertical polarization feeding of the antenna, thereby deteriorating the bandwidth characteristics.

Therefore, the signal line is implemented in a strip structure on the fourth layer 441 corresponding to a fourth floor. On the other hand, the ground surface 450 is implemented on the sixth layer 443 corresponding to the sixth floor. At this time, in both the first and second frequency bands, horizontal polarization feeding may be directly fed through the matching transformer after a signal is transmitted through a vertical via hole from the fourth layer 441, which is a fourth floor, to the fifth layer 442, which is a fifth floor. In this regard, it may be connected through a specific sized via pad and a vertical via hole, instead of a normal probe, that is, an L connection probe, a hook probe, or a meander L connection probe. On the other hand, for connection to the antenna, vertical via connection may be made from the fifth layer 442, which is the fifth floor, to the second layer 420 and the third layer 430 where the third and second patch antennas 220 and 4 are disposed.

On the other hand, for the vertical polarization feeding, coupled feeding may be made on the fourth layer 441, which is the fourth floor. Accordingly, during the vertically polarization feeding, coupled feeding may be made on the fourth layer 441 without arranging signal lines on the fifth layer 442, which is the fifth layer. For instance, for the third patch antenna 220 disposed on the second layer 420 and the fourth patch antenna 320 disposed on the third layer 9430, microstrip coupled feeding may be made through a feed line disposed on the fourth layer 441.

Meanwhile, a structure in which the first antenna element 200 and the second antenna element 300 are formed in a one-dimensional array and a two-dimensional array is as follows. In this regard, FIG. 2 is a structure in which the first antenna element 200 and the second antenna element 300 are arranged in a one-dimensional array. On the other hand, FIG. 6 shows a structure in which a first antenna element and a second antenna element according to the present disclosure are arranged in a two-dimensional array.

First, referring to FIG. 2, the first patch antenna 210 and the third patch antenna 220 operate as first antenna elements in a first frequency band. Meanwhile, the second patch antenna 220 and the fourth patch antenna 320 operate as a second antenna element 300 in a second frequency band higher than the first frequency band. Here, as illustrated in FIG. 2, the first antenna element 200 and the second antenna element 300 may be composed of "n" one-dimensional arrays. On the other hand, as illustrated in FIG. 2, the first antenna element 200 and the second antenna element 300 may be configured as a 1x4 array antenna, but are not limited thereto, and may be freely modified according to its application.

Here, the "n" one-dimensional arrays may be synthesized by a power combiner to operate as a directional antenna. Furthermore, each antenna element may be coupled to a phase shifter and then synthesized by a power combiner to perform beamforming. In addition, the "n" one-dimensional arrays may be connected to each antenna element and a baseband or digital unit to perform a multi-input multiple-output (MIMO) operation.

Meanwhile, horizontal polarization feeding and vertical polarization feeding may perform a multi-input multiple output (MIMO) operation. At this time, the "n" one-dimensional arrays are synthesized by a power combiner to operate as a directional antenna so as to improve communication coverage, and expand communication capacity through MIMO operation by horizontal polarization feeding and vertical polarization feeding.

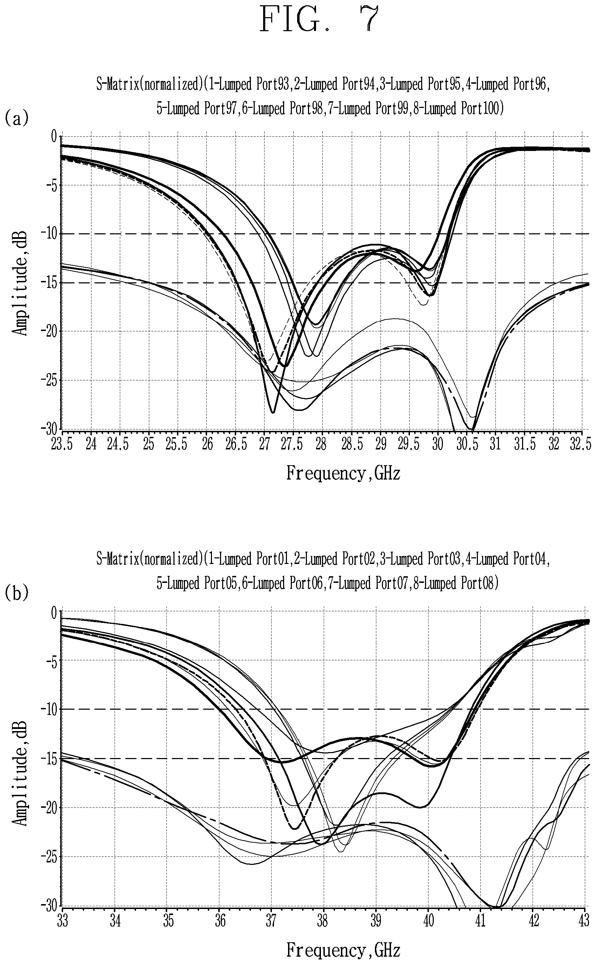

On the other hand, FIG. 7 shows reflection loss and isolation in the first and second frequency bands in a one-dimensional array structure of the present disclosure. Referring to (a) of FIG. 7, in a first frequency band including 28 GHz, a return loss characteristic below -10 dB and an isolation characteristic above 20 dB are maintained for a bandwidth above 3 GHz. Furthermore, referring to (b) of FIG. 7, in a second frequency band including 39 GHz, a return loss characteristic below -10 dB and an isolation characteristic above 20 dB are maintained for a bandwidth above 3 GHz.

Next, referring to FIG. 6, the first patch antenna 210 and the third patch antenna 220 operate as first antenna elements in a first frequency band. Meanwhile, the second patch antenna 220 and the fourth patch antenna 320 operate as a second antenna element 300 in a second frequency band higher than the first frequency band. Here, as illustrated in FIG. 6, the first antenna element 200 and the second antenna element 300 may be composed of "n x n" two-dimensional arrays.

On the other hand, as illustrated in FIG. 6, the first antenna element 200 and the second antenna element 300 may be configured as a 2x2 array antenna, but are not limited thereto, and may be freely modified according to its application. Here, the second antenna elements 300 may be arranged between adjacent first antenna elements 200. In addition, the second antenna elements 300 may be arranged offset by half of the column-direction spacing between antenna elements adjacent in a row direction. There is an advantage capable of electrically maintaining an antenna element spacing in the second frequency band within a predetermined range by the second antenna elements 300 arranged offset as described above. For example, in FIG. 2, the first antenna elements 200 in the first frequency band and the second antenna elements 300 in the second frequency band may be physically arranged with the same distance d. Accordingly, an element spacing between the second antenna elements 300 operating in the second frequency band, which is a high frequency band, is increased electrically.

On the contrary, when a spacing between the first antenna elements 200 in a structure as shown in FIG. 6 is d, a spacing between the second antenna elements 300 is reduced from d by an offset arrangement. As a result, an element spacing between the second antenna elements 300 operating in the second frequency band, which is a high frequency band, may be electrically maintained within a predetermined range.

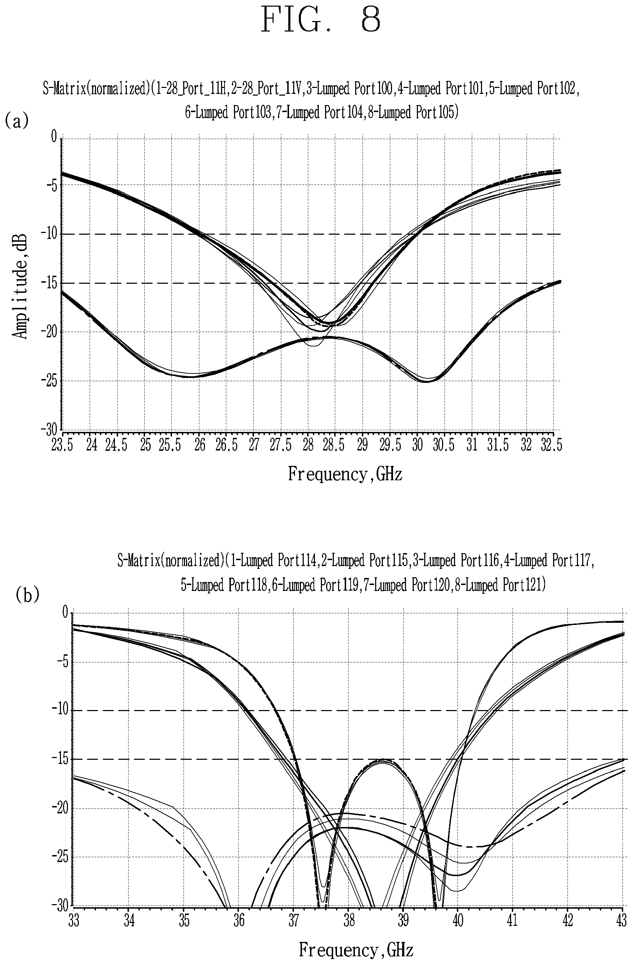

Meanwhile, FIG. 8 shows return loss and isolation in the first and second frequency bands in a two-dimensional array structure of the present disclosure. Referring to (a) of FIG. 8, in a first frequency band including 28 GHz, a return loss characteristic below -10 dB and an isolation characteristic above 20 dB are maintained for a bandwidth above 3 GHz. Furthermore, referring to (b) of FIG. 8, in a second frequency band including 39 GHz, a return loss characteristic below -10 dB and an isolation characteristic above 20 dB are maintained for a bandwidth above 3 GHz.

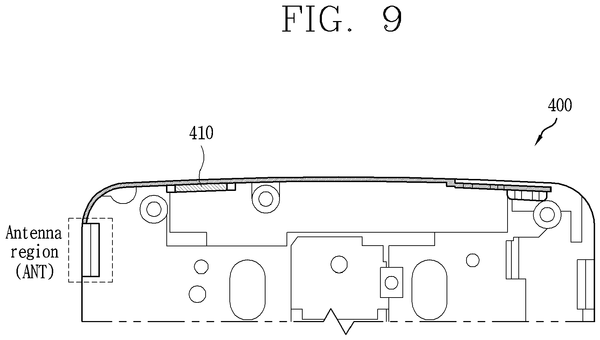

In the above, a mobile terminal including an antenna according to an aspect of the present disclosure has been described. On the other hand, a mobile terminal including a multi-layer circuit board and an antenna according to another aspect of the present disclosure will be described. In this regard, FIG. 9 shows a mobile terminal including a multi-layer circuit board and an antenna according to the present disclosure. Meanwhile, referring to FIG. 9, an RFIC 410 may be disposed on a multi-layer circuit board 400. Meanwhile, a ground is formed at a lowermost end of the multi-layer circuit board 400. Meanwhile, an antenna region (ANT) includes a first patch antenna 210 and a second patch antenna 310 as shown in FIG. 2.

The first patch antenna 210 operates in a first frequency band, and is disposed on a first layer that is an upper end of the multi-layer circuit board in a circular or polygonal shape. On the contrary, the second patch antenna310 operates in a second frequency band, which is a higher frequency band than the first frequency band, and is disposed on the same layer in a different shape from the first patch antenna 210.

On the other hand, the first patch antenna 210 may have a circular shape, and the second patch antenna 310 may have a square shape. Here, the first patch antenna 210 has a parasitic resonance frequency formed in a higher frequency band than the second frequency band due to a circular shape. Accordingly, isolation between the first patch antenna 210 and the second patch antenna 310 may be improved.

Meanwhile, referring to FIG. 2, the mobile terminal may further include a third patch antenna 220 disposed on a second layer corresponding to a bottom surface than the first layer to operate in a first frequency band together with the first patch antenna 210. In addition, the mobile terminal may further include a fourth patch antenna 320 disposed on a third layer, which is a layer different from the second layer, to operate in a second frequency band together with the second patch antenna 310. Accordingly, the fourth patch antenna 320 may be disposed on a third layer, which is a layer different from the second layer, to improve isolation from the third patch antenna 220.

On the other hand, it is more advantageous from a performance point of view in consideration of power loss that a lower patch of high frequency band is disposed further below. Meanwhile, it is more advantageous in terms of size reduction that the antenna disposed at the bottom has a square patch shape.

In this regard, the fourth patch antenna 320 is disposed on the third layer corresponding to a bottom surface than the second layer. Accordingly, isolation between the fourth patch antenna 320 and the third patch antenna 220 is improved, and the performance of the fourth patch antenna 320 in the second frequency band is improved.

Meanwhile, the third patch antenna 220 has a square shape, and the antenna size is reduced in the first frequency band compared to other shapes of antennas. In addition, the fourth patch antenna 320 has a square shape, and the antenna size is reduced in the second frequency band compared to other shapes of antennas.

In the above, a mobile terminal including an antenna according to an aspect of the present disclosure and a mobile terminal including a multi-layer circuit board and an antenna have been described. The mobile terminal including the antenna and the mobile terminal including the multi-layer circuit board and the antenna have the following characteristics.

According to at least one of the embodiments of the present disclosure, it may be possible to improve isolation between antennas operating in different frequency bands through patch antennas of different shapes.

Furthermore, according to at least one of the embodiments of the present disclosure, patch antennas of different shapes may be stacked in a vertical direction, thereby improving isolation between antennas operating in different millimeter wave frequency bands while enhancing bandwidth characteristics thereof.

In addition, according to at least one of the embodiments of the present disclosure, the shapes of patch antennas stacked in a vertical direction may be optimally selected in consideration of isolation, thereby improving isolation between antennas operating in different millimeter wave frequency bands while enhancing bandwidth characteristics thereof.

Further scope of applicability of the present disclosure will become apparent from the detailed description given hereinafter. However, it should be understood that the detailed description and specific examples such as preferred embodiments of the invention are given by way of illustration only, since various changes and modifications within the spirit and scope of the invention will become apparent to those skilled in the art from this detailed description.

In connection with the foregoing present disclosure, the design and operation of an antenna with improved isolation characteristics operating in different frequency bands and a mobile terminal including the same may be implemented as computer readable codes on a medium written by a program. The computer-readable media includes all types of recording devices in which data readable by a computer system can be stored. Examples of the computer-readable media may include ROM, RAM, CD-ROM, magnetic tape, floppy disk, and optical data storage device, and the like, and also include a device implemented in the form of a carrier wave (for example, transmission via the Internet). In addition, the computer may include the controller 180 of the electronic device. The foregoing embodiments are merely exemplary and are not to be considered as limiting the present disclosure. The scope of the invention should be determined by reasonable interpretation of the appended claims and all changes that come within the equivalent scope of the invention are included in the scope of the invention.

## Claims

1. A mobile terminal, comprising:
a first patch antenna operating in a first frequency band, and having a circular or polygonal shape; and
a second patch antenna operating in a second frequency band that is a higher frequency band than the first frequency band, and having a shape different from that of the first patch antenna.

2. The mobile terminal of claim 1, wherein the first patch antenna has a parasitic resonance frequency formed in a frequency band higher than the second frequency band due to the circular or octagonal or more polygonal shape to improve isolation from the second patch antenna.

3. The mobile terminal of claim 2, wherein the first patch antenna has the circular shape, and the second patch antenna has a square shape.

4. The mobile terminal of claim 1, wherein the first patch antenna and the second patch antenna are disposed on a first layer corresponding to the same plane to improve a steering angle range during beam steering.

5. The mobile terminal of claim 4, further comprising:
a third patch antenna disposed on a second layer corresponding to a bottom surface than the first layer to operate in the first frequency band together with the first patch antenna; and
a fourth patch antenna disposed on a third layer that is a layer different from the second layer to operate in the second frequency band together with the second patch antenna,
wherein the fourth patch antenna is disposed on a third layer that is a layer different from the second layer to improve isolation from the third patch antenna.

6. The mobile terminal of claim 4, further comprising:
a third patch antenna disposed on a second layer corresponding to a bottom surface than the first layer to operate in the first frequency band together with the first patch antenna; and
a fourth patch antenna disposed on a third layer corresponding to a bottom surface than the second layer to operate in the second frequency band together with the second patch antenna,
wherein the fourth patch antenna is disposed on a third layer corresponding to a bottom surface than the second layer to improve isolation from the third patch antenna, and improve the performance of the fourth patch antenna in the second frequency band.

7. The mobile terminal of claim 5, wherein the third patch antenna has a square shape to reduce antenna size compared to other shapes of antennas in the first frequency band.

8. The mobile terminal of claim 5, wherein the third patch antenna and the fourth patch antenna are respectively fed by horizontal polarization (HP) and vertical polarization feeding, and
either one of the horizontal polarization feeding and the vertical polarization feeding is made by direct feeding, and the other one is made by coupled feeding.

9. The mobile term inal of claim 8, wherein a feed line for the direct feeding is connected to a matching transformer on the same layer, and
the matching transformer is connected to a via pad on the same layer, and
the via pad is connected to a signal line of a lower layer through a vertical via hole from the lower layer corresponding to a bottom surface than the second layer and the third layer to the second layer and the third layer.

10. The mobile terminal of claim 5, wherein the first patch antenna and the third patch antenna operate as first antenna elements in the first frequency band, and
the second patch antenna and the fourth patch antenna operate as second antenna elements in the second frequency band, and
the first antenna elements and the second antenna elements are composed of "n" one-dimensional arrays, and the second antenna elements are disposed between adjacent first antenna elements.

11. The mobile terminal of claim 5, wherein the first patch antenna and the third patch antenna operate as first antenna elements in the first frequency band, and
the second patch antenna and the fourth patch antenna operate as second antenna elements in the second frequency band, and
the first antenna elements and the second antenna elements are composed of "n x n" two-dimensional arrays, and
the second antenna elements are disposed between adjacent first antenna elements, and
the second antenna elements are arranged offset by half of the column-direction spacing between antenna elements adjacent in a row direction.

12. A mobile terminal, comprising:
a multi-layer circuit board having a ground formed at a lowermost end thereof;
a first patch antenna operating in a first frequency band, and disposed in a circular or polygonal shape on a first layer that is an upper end of the multi-layer circuit board; and
a second patch antenna operating in a second frequency band that is a higher frequency band than the first frequency band, and disposed on the same layer as the first patch antenna in a shape different from the first patch antenna.

13. The mobile terminal of claim 12, wherein the first patch antenna has the circular shape, and the second patch antenna has a square shape, and
the first patch antenna has a parasitic resonance frequency formed in a frequency band higher than the second frequency band due to the circular shape to improve isolation from the second patch antenna.

14. The mobile terminal of claim 12, further comprising:
a third patch antenna disposed on a second layer corresponding to a bottom surface than the first layer to operate in the first frequency band together with the first patch antenna; and
a fourth patch antenna disposed on a third layer that is a layer different from the second layer to operate in the second frequency band together with the second patch antenna,
wherein the fourth patch antenna is disposed on a third layer that is a layer different from the second layer to improve isolation from the third patch antenna.

15. The mobile terminal of claim 14, wherein the fourth patch antenna is disposed on a third layer corresponding to a bottom surface than the second layer to improve isolation from the third patch antenna, and improve the performance of the fourth patch antenna in the second frequency band, and
the third patch antenna has a square shape to reduce antenna size compared to other shapes of antennas.
